# FASCICULE DE BREVET EUROPEEN

(11) **EP 2 163 176 B1**
(45) Date de publication et mention de la délivrance du brevet: **25.07.2012**
(21) Numéro de dépôt: 09168471.2
(22) Date de dépôt: 24.08.2009
(51) Int. Cl.: A47J 31/44, A47J 31/46

(54) **Système de production de mousse pour un appareil électroménager de production de boisson**
Schaumherstellungssystem für ein Haushaltsgerät zur Getränkeherstellung
Foaming system for a drink-making household appliance

(30) Priorité: 16.09.2008 FR 0805080
(43) Date de publication de la demande: 17.03.2010
(73) Titulaire: SEB SA, 69130 Ecully (FR)
(72) Inventeur: Crosville, Vincent, 14111 Louvigny (FR); Gagnon, Laurent, 14000 Caen (FR); Morin, Gilles, 14210 Sainte-Honorine-du-Fay (FR)
(74) Mandataire: Lemoine, Jean-Sébastien

(56) Documents cités:
- EP-A- 0 727 168
- EP-A- 1 491 120
- FR-A- 2 559 663

## Description

L'invention concerne un système de production de mousse pour un appareil électroménager de production de boisson, tel qu'un système de moussage de lait pour un appareil de production de café.

On connaît un système de production de mousse du type comportant un socle et un dispositif de production de mousse qui comprend une buse de moussage munie d'une conduite d'amenée de vapeur, d'une conduite d'amenée d'air et d'une ouverture d'entrée de liquide alimentaire, le dispositif de production de mousse comprenant une valve d'obturation montée mobile par rapport à la buse de moussage entre une position de fermeture dans laquelle elle ferme la conduite d'amenée d'air et une position d'ouverture dans laquelle la conduite d'amenée d'air est ouverte, le dispositif de production de mousse étant monté mobile par rapport au socle entre une position d'inactivation et une position de moussage dans laquelle la conduite d'amenée de vapeur est alimentée en vapeur et la valve d'obturation est dans sa position d'ouverture de sorte que le flux de vapeur circulant dans la buse entraîne l'air et le liquide alimentaire qui est contenu dans un récipient dans lequel la buse est plongée de façon à éjecter de la mousse.

Un tel système est par exemple décrit dans le brevet EP 727 168. Cependant, dans ce système, la valve d'obturation doit être manoeuvrée manuellement. Ainsi, quand la buse de moussage est dans sa position de moussage, selon la position de la valve, la buse produit un mélange de vapeur et de liquide alimentaire, ou un mélange comportant en outre de l'air.

La présente invention vise à réaliser un système de production dont le changement de mélange produit par la buse (vapeur et de liquide alimentaire, ou vapeur, liquide alimentaire et air) peut être facilement automatisé, sans toutefois complexifier le système ni augmenter de façon conséquente le nombre de ses éléments constitutifs.

Selon l'invention, dans le dispositif de production de mousse du type précité, le socle comprend un organe d'entraînement coopérant avec la valve d'obturation de sorte que, quand le dispositif de production de mousse est dans une position de chauffage dans laquelle la conduite d'amenée de vapeur est alimentée en vapeur, la valve est dans sa position de fermeture.

Il est ainsi possible, en ne déplaçant que le dispositif de production de mousse, que le système ait trois états successifs, un état inactif, un état de chauffage dans lequel la buse éjecte de la vapeur, sans air, et un état de moussage dans lequel la buse éjecte le mélange de vapeur, liquide alimentaire et air. Le fait que le changement d'état ne dépende que de la position du dispositif de production de mousse (et plus précisément, de la position relative de la buse par rapport au socle) donne la possibilité d'automatiser les changements d'état de façon très simple, par exemple en disposant un moteur entre la buse et le socle.

D'autres particularités et avantages de la présente invention apparaîtront dans le mode de réalisation donné à titre d'exemple non limitatif et illustré par les dessins mis en annexe dans lesquels :
La figure 1 est une vue d'ensemble du système qui est dans son état d'inactivation ;
La figure 2 est une vue agrandie de la zone II de la figure 1 ;
La figure 3 est une vue agrandie de la zone III de la figure 1, le système étant dans son état d'inactivation ;
La figure 4 est une vue similaire à la figure 3, le système étant dans son état de chauffage ; et
La figure 5 est une vue similaire aux figures 3 et 4, le système étant dans son état de moussage.

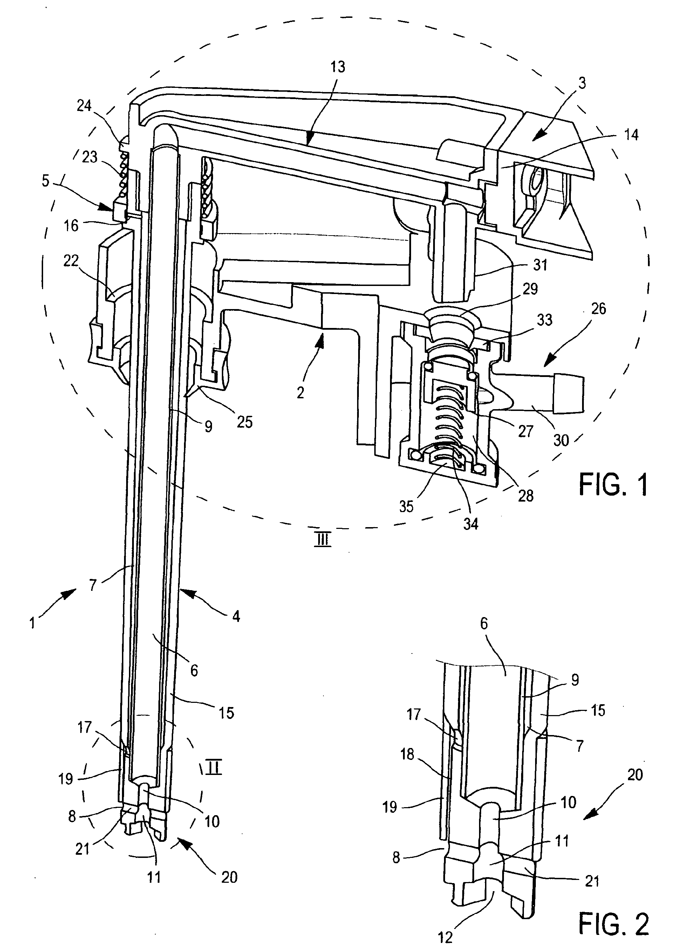

Comme illustré à la figure 1, un système de production de mousse 1 comporte un socle 2 qui est relié à un générateur de vapeur (non illustré), et un dispositif de production de mousse 3.

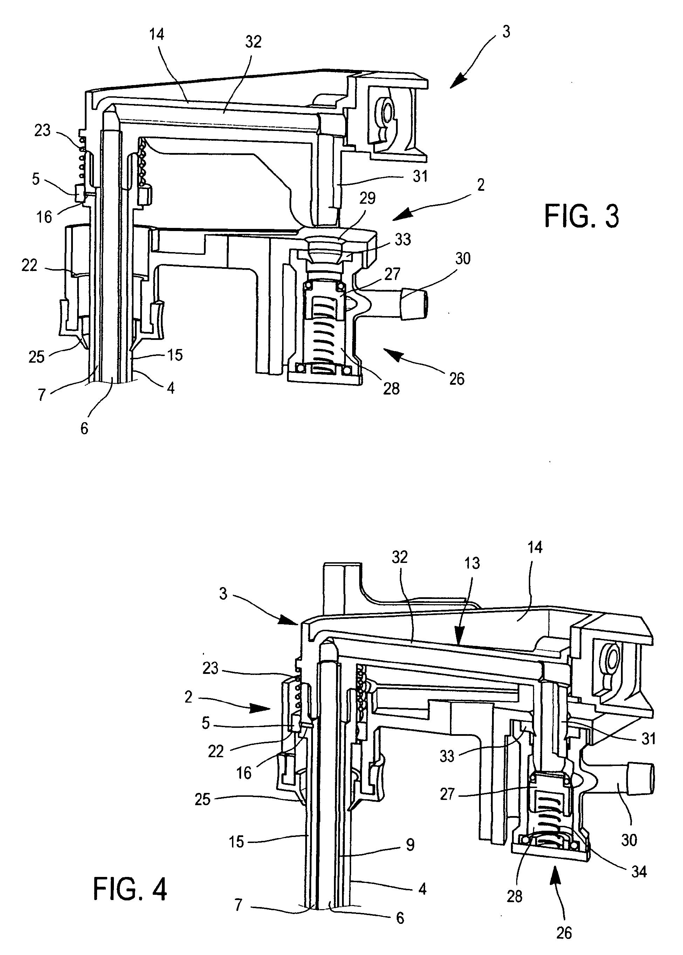

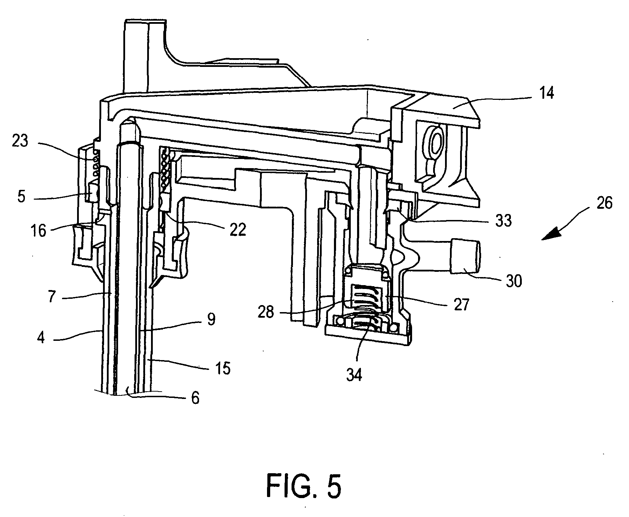

Le dispositif de production de mousse 3 est monté mobile par rapport au socle 2 (ici, en translation) entre une position d'inactivation telle qu'illustrée aux figures 1 et 3, une position de moussage telle qu'illustré à la figure 5, et une position intermédiaire de chauffage telle qu'illustrée à la figure 4. Ici, le dispositif de production de mousse 3 en position d'inactivation est dans une position surélevée par rapport à la position de moussage, la position de chauffage se trouvant entre les positions d'inactivation et de moussage.

Dans le présent mode de réalisation, le déplacement du dispositif de production de mousse 3 est réalisé par un moteur électrique commandé par des moyens de commande (des boutons de commande manuelle et/ou des capteurs).

Le dispositif de production de mousse 3 comprend une buse de moussage 4 et une valve d'obturation 5 qui est montée mobile par rapport à la buse de moussage 4 (ici, en translation selon une direction parallèle à la direction de translation du dispositif de production de mousse 3) entre une position de fermeture et une position d'ouverture. Ici, la valve d'obturation 5 en position d'ouverture est dans une position surélevée par rapport à la position de fermeture. Par ailleurs, la valve d'obturation 5 est formée par un joint annulaire 5 qui entoure la buse de moussage 4.

Dans le présent exemple, la buse de moussage 4 s'étend longitudinalement selon la direction de translation du dispositif de production de mousse 3. Elle est munie d'une conduite d'amenée de vapeur 6, d'une conduite d'amenée d'air 7 et d'une ouverture d'entrée de liquide alimentaire 8.

De façon plus précise, la conduite d'amenée de vapeur 6 est délimitée par un tube central 9 qui s'étend longitudinalement selon la direction longitudinale de la buse de moussage 4 et qui forme le coeur de cette dernière. La conduite d'amenée de vapeur 6 est prolongée, à son extrémité aval (ici, son extrémité inférieure), par un canal central 10 dont la section droite est inférieure à la section droite interne du tube central 9. Le canal central 10 débouche dans une cavité d'évacuation 11 dont la section droite est supérieure à celle du canal central 10, et dont l'extrémité aval forme l'ouverture d'évacuation 12 de la buse de moussage 4. Par ailleurs, la conduite d'amenée de vapeur 6 est prolongée, à son extrémité amont, par un canal de liaison 13 qui est porté par un organe de support 14 auquel est immobilisée la buse de moussage 4. Ainsi, le dispositif de production de mousse 3 comprend un circuit de vapeur qui est formé, de l'amont vers l'aval, par le canal de liaison 13, la conduite d'amenée de vapeur 6, le canal central 10 et la cavité d'évacuation 11.

La conduite d'amenée d'air 7 est délimitée, d'une part, par le tube central 9 qui délimite la conduite d'amenée de vapeur 6, et d'autre part, par un tube externe 15 qui entoure le tube central 9 et qui forme l'enveloppe externe de la buse de moussage 4. Cette conduite d'amenée d'air 7 s'étend sur la majorité de la longueur du tube central 9 et sa disposition adjacente à la conduite d'amenée de vapeur 6 permet le réchauffage de l'air y circulant. La conduite d'amenée d'air 7 est prolongée, à son extrémité amont (à proximité de l'extrémité supérieure de la buse de moussage 4), par un canal amont 16 qui traverse la paroi cylindrique du tube externe 15 et dont l'orifice extérieur d'entrée d'air est obstrué par la valve d'obturation 5 quand elle est en position de fermeture, et en est dégagé quand elle est en position d'ouverture. La conduite d'amenée d'air 7 est par ailleurs prolongée, à son extrémité aval, par un canal aval 17 qui traverse la paroi cylindrique du tube externe 15 (à proximité de l'extrémité supérieure de la buse de moussage 4). Le canal aval 17 est lui-même prolongé par un canal annulaire 18 qui est délimité par le tube externe 15 et par un manchon 19 ceinturant la partie inférieure du tube externe 15, le canal annulaire 18 se terminant au niveau de l'extrémité inférieure du manchon 19. Le dispositif de production de mousse 3 comprend ainsi un circuit d'air qui est formé, de l'amont vers l'aval, par le canal amont 16, la conduite d'amenée d'air 7, le canal aval 17 et le canal annulaire 18, la valve d'obturation 5 étant située à l'extrémité amont de ce circuit d'air.

Dans le présent mode de réalisation, le manchon 19 est un joint amovible permettant ainsi un nettoyage aisé de la partie inférieure de la buse de moussage 4, tout en assurant l'étanchéité de la partie inférieure du circuit d'air.

L'ouverture d'entrée de liquide alimentaire 8 est délimitée par l'extrémité inférieure du manchon 19 et se trouve au débouché du canal annulaire 18 du circuit d'air.

La buse de moussage 4 comporte, à son extrémité inférieure, une tête de moussage 20 où se réalise le mélange entre la vapeur, l'air et le liquide alimentaire par effet Venturi, le flux de vapeur, du fait des sections droites respectives de la conduite d'amenée de vapeur 6, du canal central 10 et de la cavité d'évacuation 11. Afin de réaliser l'effet Venturi, un canal d'aspiration 21 traverse la paroi cylindrique du tube externe 15 en débouchant dans la cavité d'évacuation 11 et à l'extérieur du tube externe, juste sous l'extrémité inférieure du manchon 19. De ce fait, le canal d'aspiration 21 relie le circuit de vapeur et la jonction de l'ouverture d'entrée de liquide alimentaire 8 avec le circuit d'air.

Le socle 2 comprend un organe d'entraînement 22 qui coopère avec la valve d'obturation 5 de sorte que, quand le dispositif de production de mousse 3 est dans sa position de moussage, la valve 5 est dans sa position d'ouverture dans laquelle la conduite d'amenée d'air 7 est ouverte, et quand il est dans sa position de chauffage, elle est dans sa position de fermeture dans laquelle elle ferme la conduite d'amenée d'air 7. Dans le présent mode de réalisation, l'organe d'entraînement 22 est formé par une surface 22 contre laquelle la valve d'obturation 5 (par sa surface inférieure) vient en butée lors de la descente du dispositif de production de mousse 3, et qui entraîne cette dernière de sa position de fermeture à sa position d'ouverture quand le dispositif de production de mousse 3 passe de sa position de chauffage à sa position de moussage. Ici, l'organe d'entraînement 22 est formé par la surface supérieure d'une couronne annulaire au travers de laquelle la buse de moussage 4 est montée en translation.

Dans le présent exemple, la valve d'obturation 5 est sollicitée dans sa position de fermeture par un ressort 23, de sorte que, lorsque le dispositif de production de mousse 3 passe de sa position de moussage à sa position de chauffage, la valve d'obturation 5 passe automatiquement de sa position d'ouverture à sa position de fermeture, et lorsque le dispositif de production de mousse passe de sa position de chauffage à sa position d'inactivation, la valve 5 reste dans sa position de fermeture. Ici, le ressort 23 prend appui, d'une part, sur la surface supérieure de la valve d'obturation 5, et d'autre part, sur un épaulement annulaire 24 porté par l'organe de support 14.

Par cette configuration de la valve d'obturation, lors de la plongée de la buse de moussage 4 dans un récipient contenant du liquide alimentaire (par exemple, du lait), c'est-à-dire lorsque le dispositif de production de mousse 3 passe de sa position d'inactivation à sa position de chauffage, la valve d'obturation demeure dans sa position de fermeture, ce qui empêche l'introduction du liquide dans le circuit d'air, et donc facilite l'entretien de la buse de moussage 4 en la dispensant d'un nettoyage fastidieux.

Le socle comprend également un organe de raclage 25 qui est adapté à nettoyer la buse de moussage 4 (plus précisément, le tube externe 15) lors du mouvement de remontée du dispositif de production de mousse 3. Dans le présent exemple, l'organe de raclage 25 est un joint souple annulaire qui, ici, est fixé à la partie inférieure de la couronne annulaire formant l'organe d'entraînement 22.

Enfin, le socle 2 comprend un dispositif de libération de vapeur 26 auquel la conduite d'amenée de vapeur 6 est reliée quand le dispositif de production de mousse 3 est dans sa position de moussage ou dans sa position de chauffage, et duquel elle est déconnectée quand le dispositif de production de mousse 3 est dans sa position d'inactivation. Ceci permet d'alimenter la buse de moussage 4 en vapeur uniquement quand la tête de moussage 20 plonge dans le liquide alimentaire (quand le dispositif de production de mousse 3 atteint sa position de chauffage) et évite donc les projections de vapeur. Le dispositif de libération de vapeur 26 est muni d'un clapet 27 qui est mobile (ici, en translation selon une direction parallèle à la direction de translation du dispositif de production de mousse 3) entre une position de fermeture dans laquelle la vapeur ne peut s'échapper du dispositif de libération de vapeur 26, et une position d'ouverture dans laquelle la vapeur peut s'en échapper. Ici, le clapet 27 en position de fermeture est dans une position surélevée par rapport à la position d'ouverture. Le dispositif de libération de vapeur 26 comprend une cavité d'évacuation 28 qui comporte une ouverture de sortie de vapeur 29 (réalisée dans sa paroi supérieure), et une conduite d'entrée de vapeur 30 qui est reliée au générateur de vapeur et qui débouche dans la cavité d'évacuation 28 (dans une paroi latérale de cette dernière). Le clapet 27 est disposé dans la cavité d'évacuation de vapeur 28 et obstrue l'ouverture de sortie de vapeur 29 par sa surface supérieure, et l'extrémité aval de la conduite d'entrée de vapeur 30 par sa surface latérale quand il est dans sa position de fermeture ; il les dégage quand il est dans sa position d'ouverture.

Le dispositif de production de mousse 3 comprend un organe d'activation 31 qui est adapté à entraîner le clapet 27 de sa position de fermeture à sa position d'ouverture quand il passe de sa position d'inactivation à sa position de chauffage, et à le maintenir dans sa position d'ouverture quand il est dans ses positions de chauffage et de moussage et quand il est entre ces deux positions. Dans le présent exemple, l'organe d'activation 31 est formé par un tube d'activation qui est creux et qui est prolongé en aval par la conduite d'amenée de vapeur 6 de la buse de moussage 4. Ce tube d'activation 31 est adapté à traverser l'ouverture de sortie de vapeur 30 quand le dispositif de production de mousse 3 est entre ses positions de chauffage et de moussage et à réaliser ainsi la connexion entre la buse de moussage 4 et le générateur de vapeur. Dans le présent mode de réalisation, le tube d'activation 31 s'étend longitudinalement selon la direction de translation du dispositif de production de mousse 3. Ce tube d'activation 31 forme la partie amont du canal de liaison 13 dont l'autre partie est formée par un tube de liaison 32 qui relie le tube d'activation 31 à la conduite d'amenée de vapeur 6. Dans le présent exemple, afin d'assurer l'étanchéité entre le circuit de vapeur et le dispositif de libération de vapeur 26 quand le dispositif de production de mousse est dans ses positions de chauffage et de moussage, l'ouverture de sortie de vapeur 29 de la cavité d'évacuation 28 est ceinturée par un joint annulaire 33 souple dont la lèvre vient racler la surface extérieure du tube d'activation 31.

Dans le présent exemple, le clapet 27 est sollicité dans sa position de fermeture par un ressort 34, de sorte que, lorsque le dispositif de production de mousse 3 passe de sa position de chauffage à sa position d'inactivation, le clapet 27 passe automatiquement de sa position d'ouverture à sa position de fermeture. Ici, le ressort 34 est logé dans la cavité d'évacuation 28 et prend appui, d'une part, sur la surface inférieure du clapet 27, et d'autre part, sur la surface inférieure 35 de la cavité d'évacuation qui est opposée à l'ouverture de sortie de vapeur 29.

Par cette configuration du clapet 27 et de l'organe d'activation 13, lors de la remontée de la buse de moussage 4, c'est-à-dire lorsque le dispositif de production de mousse 3 passe de sa position de chauffage à sa position d'inactivation, la clapet 27 passe à sa position de fermeture, ce qui entraîne l'arrêt de l'alimentation du circuit de vapeur avant que la tête de moussage 20 ne soit émergée, ce qui protège d'utilisateur des projections de vapeur.

En utilisation, initialement, le dispositif de production de mousse 3 est dans sa position d'inactivation dans laquelle, dans le présent mode de réalisation, le circuit de vapeur (et donc la conduite d'amenée de vapeur 6) n'est pas alimenté du fait de la déconnexion entre le dispositif de production de mousse 3 avec le générateur de vapeur, le circuit d'air (et donc la conduite d'amenée d'air 7) est fermé du fait de la valve d'obturation 5 dans sa position de fermeture.

Après avoir disposé un récipient contenant une quantité suffisamment importante de lait pour que la tête de moussage 20 soit immergée quand le dispositif de production de mousse 3 est dans sa position de chauffage, par l'activation de moyens de commande (par exemple, un bouton de commande manuelle), le dispositif de production de mousse 3 passe de sa position d'inactivation à sa position de chauffage dans laquelle le circuit de vapeur (et donc la conduite d'amenée de vapeur 6) est alimenté du fait de la connexion entre le dispositif de production de mousse 3 et le générateur de vapeur (la pénétration du tube d'activation 31 dans le dispositif de libération de vapeur 26), le circuit d'air (et donc la conduite d'amenée d'air 7) est toujours fermé. De ce fait, la buse de moussage 4 éjecte de la vapeur, sans apport d'air, afin de chauffer le lait contenu dans le récipient. Dans le présent exemple, le circuit de liquide alimentaire étant réduit à sa plus simple expression (une simple ouverture d'entrée de liquide alimentaire 8, sans dispositif de fermeture), le flux de vapeur entraîne l'aspiration du lait et donc sa circulation dans le canal d'aspiration 21 et la cavité d'évacuation 11. Le mouvement du lait améliore l'homogénéité de son chauffage. Lors du mouvement de descente, le lait n'a pas tendance à pénétrer à l'intérieur du circuit d'air vu la position de la valve d'obturation.

Suite à une nouvelle activation de moyens de commande (par exemple l'atteinte d'une température de consigne), le dispositif de production de mousse 3 passe de sa position de chauffage à sa position de moussage par un abaissement (ici, par l'abaissement de quelques millimètres - par exemple 5 mm) dans laquelle le circuit de vapeur (et donc la conduite d'amenée de vapeur 6) est toujours alimenté, le circuit d'air (et donc la conduite d'amenée d'air 7) est ouverte du fait du relèvement de la valve d'obturation 5 par l'organe d'entraînement, et le circuit de liquide alimentaire est toujours ouvert. De ce fait, la buse de moussage 4 éjecte de la mousse de lait qui est formée par le mélange de la vapeur, du lait et de l'air, ces deux derniers fluides étant aspirés par le flux de la vapeur et circulant dans le canal d'aspiration 21 et la cavité d'évacuation 11.

Enfin, après l'opération de moussage terminée, le dispositif de production de mousse 3 passe de sa position de moussage à sa position d'inactivation, permettant un retrait aisé du récipient. Lors de cette remontée, l'organe de raclage 25 enlève les résidus de mousse de la surface extérieure de la buse de moussage 4.

La présente invention n'est pas limitée au mode de réalisation illustré par les dessins. La buse de moussage pourrait avoir une configuration différente, tout comme le dispositif de libération de vapeur.

## Revendications

1. Système de production de mousse (1) comportant un socle (2) et un dispositif de production de mousse (3) qui comprend une buse de moussage (4) munie d'une conduite d'amenée de vapeur (6), d'une conduite d'amenée d'air (7) et d'une ouverture d'entrée de liquide alimentaire (8), le dispositif de production de mousse (3) comprenant une valve d'obturation (5) montée mobile par rapport à la buse de moussage (4) entre une position de fermeture dans laquelle elle ferme la conduite d'amenée d'air (7) et une position d'ouverture dans laquelle la conduite d'amenée d'air (7) est ouverte, le dispositif de production de mousse (3) étant monté mobile par rapport au socle (2) entre une position d'inactivation et une position de moussage dans laquelle la conduite d'amenée de vapeur (6) est alimentée en vapeur et la valve d'obturation (5) est dans sa position d'ouverture de sorte que le flux de vapeur circulant dans la buse (4) entraîne l'air et le liquide alimentaire qui est contenu dans un récipient dans lequel la buse (4) est plongée de façon à éjecter de la mousse, **caractérisé en ce que** le socle (2) comprend un organe d'entraînement (22) coopérant avec la valve d'obturation (5) de sorte que, quand le dispositif de production de mousse (3) est dans une position de chauffage dans laquelle la conduite d'amenée de vapeur (6) est alimentée en vapeur, la valve (5) est dans sa position de fermeture.

2. Système de production de mousse (1) selon la revendication 1, **caractérisé en ce que** la position de chauffage est située entre les positions d'inactivation et de moussage.

3. Système de production de mousse (1) selon la revendication 1 ou 2, **caractérisé en ce que** le dispositif de production de mousse (3) est mobile en translation par rapport au socle (2).

4. Système de production de mousse (1) selon la revendication 3, **caractérisé en ce que** la valve d'obturation (5) est mobile en translation selon la direction de translation du dispositif de production de mousse (3).

5. Système de production de mousse (1) selon la revendication 4, **caractérisé en ce que** la valve d'obturation (5) est formée par un joint annulaire (5) entourant la buse de moussage (4) qui s'étend longitudinalement selon la direction de translation du dispositif de production de mousse (3).

6. Système de production de mousse (1) selon l'une des revendications 1 à 5, **caractérisé en ce que** l'organe d'entraînement (22) est formé par une surface qui reçoit la valve d'obturation (5) en butée, et qui entraîne cette dernière de sa position de fermeture à sa position d'ouverture quand le dispositif de production de mousse (3) passe de sa position de chauffage à sa position de moussage.

7. Système de production de mousse (1) selon l'une des revendications 1 à 6, **caractérisé en ce que** la valve d'obturation (5) est située à l'extrémité amont de la conduite d'amenée d'air (7).

8. Système de production de mousse (1) selon l'une des revendications 1 à 7, **caractérisé en ce que** la valve d'obturation (5) est sollicitée dans sa position de fermeture par un ressort (23).

9. Système de production de mousse (1) selon l'une des revendications 1 à 8, **caractérisé en ce que** le socle (2) comprend un organe de raclage (25) adapté à racler la surface extérieure de la buse (4).

10. Système de production de mousse (1) selon l'une des revendications 1 à 8, **caractérisé en ce que** le socle (2) comprend un dispositif de libération de vapeur (26) auquel la conduite d'amenée de vapeur (6) est reliée quand le dispositif de production de mousse (3) est dans sa position de moussage ou dans sa position de chauffage, et duquel elle est déconnectée quand le dispositif de production de mousse (3) est dans sa position d'inactivation.

11. Système de production de mousse (1) selon la revendication 10, **caractérisé en ce que** le dispositif de libération de vapeur (26) est muni d'un clapet (27) mobile entre une position de fermeture dans laquelle la vapeur ne peut s'échapper du dispositif de libération de vapeur (26), et une position d'ouverture dans laquelle la vapeur peut s'en échapper, le dispositif de production de mousse (3) comprenant un organe d'activation (31) adapté à entraîner le clapet (27) de sa position de fermeture à sa position d'ouverture quand il passe de sa position d'inactivation à sa position de chauffage, et à le maintenir dans sa position d'ouverture quand il est dans ses positions de chauffage et de moussage.

12. Système de production de mousse (1) selon la revendication 11, **caractérisé en ce que** le dispositif de libération de vapeur (26) comprend une cavité d'évacuation (28) qui comporte une ouverture de sortie de vapeur (29) et dans laquelle est disposé le clapet (27), l'organe d'activation (31) étant formé par un tube d'activation creux qui est prolongé en aval par la conduite d'amenée de vapeur (6) de la buse de moussage (4), et qui est adapté à traverser l'ouverture de sortie de vapeur (29) quand le dispositif de production de mousse (3) est entre ses positions de chauffage et de moussage.

13. Système de production de mousse (1) selon la revendication 12, **caractérisé en ce que** l'ouverture de sortie de vapeur (29) est ceinturée par un joint annulaire (33) adapté à réaliser la jonction étanche entre le tube d'activation (31) et la cavité d'évacuation (28).

14. Système de production de mousse (1) selon la revendication 12 ou 13, **caractérisé en ce que** le dispositif de libération de vapeur (26) comprend une conduite d'entrée de vapeur (30) reliée à un générateur de vapeur et débouchant dans la cavité d'évacuation (28), le clapet (27) obstruant l'extrémité aval de la conduite d'entrée de vapeur (30) quand il est dans sa position de fermeture, et la dégageant quand il est dans sa position d'ouverture.

15. Système de production de mousse (1) selon l'une des revendications 11 à 14, **caractérisé en ce que** le clapet (27) est sollicité dans sa position de fermeture par un ressort (34).

## Claims

1. System (1) for production of foam, including a base (2) and a foam production device (3) that includes a foaming nozzle (4) provided with a steam feed pipe (6), an air feed pipe (7) and a food liquid inlet opening (8), the foam production device (3) including a shut-off valve (5) mounted so as to be mobile relative to the foaming nozzle (4) between a closed position in which it closes the air feed pipe (7) and an open position in which the air feed pipe (7) is open, the foam production device (3) being mounted so as to be mobile relative to the base (2) between an inactivation position and a foaming position in which the steam feed pipe (6) is fed with steam and the shut-off valve (5) is in its open position so that the flow of steam flowing in the nozzle (4) entrains air and the food liquid that is contained in a container in which the nozzle (4) is immersed so as to eject foam, **characterised in that** the base (2) includes a drive member (22) cooperating with the shut-off valve (5) so that, when the foam production device (3) is in a heating position in which the steam feed pipe (6) is fed with steam, the valve (5) is in its closed position.

2. Foam production system (1) according to claim 1, **characterised in that** the heat in position is situated between the inactivation and foaming positions.

3. Foam production system (1) according to claim 1 or 2, **characterised in that** the foam production device (3) is mobile in translation relative to the base (2).

4. Foam production system (1) according to claim 3, **characterised in that** the shut-off valve (5) is mobile in translation in the translation direction of the foam production device (3).

5. Foam production system (1) according to claim 4, **characterised in that** the shut-off valve (5) is formed by an annular seal (5) surrounding the foaming nozzle (4) that extends longitudinally in the translation direction of the foam production device (3).

6. Foam production system (1) according to any one of claims 1 to 5, **characterised in that** the drive member (22) is formed by a surface on which the shut-off valve (5) abuts and that drives the latter from its closed position to its open position when the foam production device (3) goes from its heating position to its foaming position.

7. Foam production system (1) according to any one of claims 1 to 6, **characterised in that** the shut-off valve (5) is situated at the upstream end of the air feed pipe (7).

8. Foam production system (1) according to any one of claims 1 to 7, **characterised in that** the shut-off valve (5) is urged into its closed position by a spring (23).

9. Foam production system (1) according to any one of claims 1 to 8, **characterised in that** the base (2) includes a scraper member (25) adapted to scrape the exterior surface of the nozzle (4).

10. Foam production system (1) according to any one of claims 1 to 8, **characterised in that** the base (2) includes a steam release device (26) to which the steam feed pipe (6) is connected when the foam production device (3) is in its foaming position or in its heating position and from which it is disconnected when the steam production device (3) is in its inactivation position.

11. Foam production system (1) according to claim 10, **characterised in that** the steam release device (26) is provided with a valve (27) mobile between a closed position in which steam cannot escape from the steam release device (26) and an open position in which steam can escape therefrom, the foam production device (3) including an activation member (31) adapted to drive the valve (27) from its closed position to its open position when it goes from its inactivation position to its heating position and to hold it in its open position when it is in its heating and foaming positions.

12. Foam production system (1) according to claim 11, **characterised in that** the steam release device (26) includes an evacuation cavity (28) that includes a steam outlet opening (29) and in which the valve (27) is disposed, the activation member (31) being formed by a hollow activation tube that is extended at the downstream end by the steam feed pipe (6) of the foaming nozzle (4) and that is adapted to pass through the steam outlet opening (29) when the foam production device (3) is between its heating and foaming positions.

13. Foam production system (1) according to claim 12, **characterised in that** the steam outlet opening (29) is surrounded by an annular seal (33) adapted to provide the sealed junction between the activation tube (31) and the evacuation cavity (28).

14. Foam production system (1) according to claim 12 or 13, **characterised in that** the steam release device (26) includes a steam inlet pipe (30) connected to a steam generator and opening into the evacuation cavity (28), the valve (27) shutting off the downstream end of the steam inlet pipe (30) when it is in its closed position and freeing it when it is in its open position.

15. Foam production system (1) according to any one of claims 11 to 14, **characterised in that** the valve (27) is urged into its closed position by a spring (34).

## Patentansprüche

1. System zur Schaumerzeugung (1), umfassend einen Sockel (2) und eine Vorrichtung zur Schaumerzeugung (3), die eine Schaumbildungsdüse (4) umfasst, die mit einer Dampfzuleitung (6), einer Luftzuleitung (7) und einer Eintrittsöffnung für ein flüssiges Lebensmittel (8) versehen ist, wobei die Vorrichtung zur Schaumerzeugung (3) ein Verschlussventil (5) umfasst, das beweglich in Bezug zur Schaumbildungsdüse (4) zwischen einer Verschlussposition, in der es die Luftzuleitung (7) verschließt und einer Öffnungsposition, in der Luftzuleitung (7) offen ist, montiert ist, wobei die Vorrichtung zur Schaumerzeugung (3) in Bezug zum Sockel (2) beweglich zwischen einer Inaktivierungsposition und einer Schaumbildungsposition, in der die Dampfzuleitung (6) mit Dampf versorgt wird und sich das Verschlussventil (5) in seiner Öffnungsposition befindet, montiert ist, so dass der in der Düse (4) zirkulierende Dampfstrom die Luft und das flüssige Lebensmittel, das in einem Behälter enthalten ist, in den die Düse (4) eintaucht, um den Schaum auszuwerfen, mitnimmt, **dadurch gekennzeichnet, dass** der Sockel (2) ein Antriebselement (22) umfasst, das mit dem Verschlussventil (5) zusammenwirkt, so dass, wenn sich die Vorrichtung zur Schaumerzeugung (3) in einer Erhitzungsposition befindet, in der die Dampfzuleitung (6) mit Dampf versorgt wird, das Ventil (5) in seiner Verschlussposition ist.

2. System zur Schaumerzeugung (1) nach Anspruch 1, **dadurch gekennzeichnet, dass** sich die Erhitzungsposition zwischen der Inaktivierungsposition und der Schaumbildungsposition befindet.

3. System zur Schaumerzeugung (1) nach Anspruch 1 oder 2, **dadurch gekennzeichnet, dass** die Vorrichtung zur Schaumerzeugung (3) in Translation in Bezug zum Sockel (2) beweglich ist.

4. System zur Schaumerzeugung (1) nach Anspruch 3, **dadurch gekennzeichnet, dass** das Verschlussventil (5) in Translation in die Translationsrichtung der Vorrichtung zur Schaumerzeugung (3) beweglich ist.

5. System zur Schaumerzeugung (1) nach Anspruch 4, **dadurch gekennzeichnet, dass** das Verschlussventil (5) von einer Ringdichtung (33) gebildet ist, die die Schaumbildungsdüse (4) umgibt und sich längs in die Translationsrichtung der Vorrichtung zur Schaumerzeugung (3) erstreckt.

6. System zur Schaumerzeugung (1) nach einem der Ansprüche 1 bis 5, **dadurch gekennzeichnet, dass** das Antriebselement (22) von einer Fläche gebildet ist, an die das Verschlussventil (5) anschlägt und die dieses letztgenannten von seiner Verschlussposition in seine Öffnungsposition bringt, wenn die Vorrichtung zur Schaumerzeugung (3) von ihrer Erhitzungsposition in ihre Schaumbildungsposition übergeht.

7. System zur Schaumerzeugung (1) nach einem der Ansprüche 1 bis 6, **dadurch gekennzeichnet, dass** das Verschlussventil (5) am stromaufwärtigen Ende der Luftzuleitung (7) angeordnet ist.

8. System zur Schaumerzeugung (1) nach einem der Ansprüche 1 bis 7, **dadurch gekennzeichnet, dass** das Verschlussventil (5) in seine Verschlussposition durch eine Feder (23) gedrückt wird.

9. System zur Schaumerzeugung (1) nach einem der Ansprüche 1 bis 8, **dadurch gekennzeichnet, dass** der Sockel (2) ein Abstreifelement (25) umfasst, das dazu vorgesehen ist, die Außenfläche der Düse (4) abzustreifen.

10. System zur Schaumerzeugung (1) nach einem der Ansprüche 1 bis 8, **dadurch gekennzeichnet, dass** der Sockel (2) eine Vorrichtung zur Dampfabgabe (26) umfasst, mit der die Dampfzuleitung (6) verbunden ist, wenn sich die Vorrichtung zur Schaumerzeugung (3) in ihrer Schaumbildungsposition oder in ihrer Erhitzungsposition befindet, und von der sie getrennt ist, wenn sich die Vorrichtung zur Schaumferzeugung (3) in ihrer Inaktivierungsposition befindet.

11. System zur Schaumerzeugung (1) nach Anspruch 10, **dadurch gekennzeichnet, dass** die Vorrichtung zur Dampfabgabe (26) mit einer Klappe (27) versehen ist, die zwischen einer Verschlussposition, in der der Dampf nicht aus der Vorrichtung zur Dampfabgabe (26) austreten kann, und einer Öffnungsposition, in der der Dampf daraus austreten kann, beweglich ist, wobei die Vorrichtung zur Schaumerzeugung (3) ein Aktivierungselement (31) umfasst, das dazu vorgesehen ist, die Klappe (27) aus ihrer Verschlussposition in ihre Öffnungsposition zu bringen, wenn sie von ihrer Inaktivierungsposition in ihre Erhitzungsposition übergeht, und sie in ihrer Öffnungsposition zu halten, wenn sie sich in ihren Erhitzungs- und Schaumbildungspositionen befindet.

12. System zur Schaumerzeugung (1) nach Anspruch 11, **dadurch gekennzeichnet, dass** die Vorrichtung zur Dampfabgabe (26) einen Ableitungshohlraum (28) umfasst, der eine Dampfaustrittsöffnung (29) aufweist und in dem die Klappe (27) angeordnet ist, wobei das Aktivierungselement (31) von einem hohlen Aktivierungsrohr gebildet ist, das stromabwärts durch die Dampfzuleitung (6) der Schaumbildungsdüse (4) verlängert und dazu vorgesehen ist, durch die Dampfaustrittsöffnung (29) hindurch zu verlaufen, wenn sich die Vorrichtung zur Schaumerzeugung (3) zwischen ihren Erhitzungs- und Schaumbildungspositionen befindet.

13. System zur Schaumerzeugung (1) nach Anspruch 12, **dadurch gekennzeichnet, dass** die Dampfaustrittsöffnung (29) von einer Ringdichtung (33) umgeben ist, die dazu vorgesehen ist, die dichte Verbindung zwischen dem Aktivierungsrohr (31) und dem Ableitungshohlraum (28) herzustellen.

14. System zur Schaumerzeugung (1) nach Anspruch 12 oder 13, **dadurch gekennzeichnet, dass** die Vorrichtung zur Dampfabgabe (26) eine Dampfeintrittsleitung (30) umfasst, die mit einem Dampferzeuger verbunden ist und in den Ableitungshohlraum (28) mündet, wobei die Klappe (27) das stromabwärtige Ende der Dampfeintrittsleitung (30) verschließt, wenn sie sich in ihrer Verschlussposition befindet, und diese freigibt, wenn sie sich in ihrer Öffnungsposition befindet.

15. System zur Schaumerzeugung (1) nach einem der Ansprüche 11 bis 14, **dadurch gekennzeichnet, dass** die Klappe (27) in ihre Verschlussposition durch eine Feder (34) gedrückt wird.
